# EUROPEAN PATENT APPLICATION

(11) **EP 2 066 003 A2**
(43) Date of publication of application: **03.06.2009**
(21) Application number: 08169448.1
(22) Date of filing: 19.11.2008
(51) Int. Cl.: H02J 7/34, H02J 7/00, H02M 3/156

(54) **Power supply apparatus**

(30) Priority: 27.11.2007 JP 2007305910
(71) Applicant: Kabushiki Kaisha Toyota Jidoshokki, Kariya-shi, Aichi 448-8671 (JP)
(72) Inventor: Suzuki, Sadanori, Kariya-shi Aichi 448-8671 (JP); Sakata, Seiki, Kariya-shi Aichi 448-8671 (JP)
(74) Representative: TBK-Patent

(57) **Abstract**

A power supply apparatus that supplies voltage of a battery to a load is disclosed. The power supply apparatus includes a booster circuit connected to the battery and a power storage section, which temporarily stores the power output by the booster circuit. The power storage section is connected in parallel with the load.

## Description

### FIELD OF THE INVENTION

The present invention relates to a power supply apparatus, and, more particularly, to a power supply apparatus suitable as a power supply to a load in which a power consumption rises temporarily for a short time.

### BACKGROUND OF THE INVENTION

To connect a high-power load to a power supply with a low output voltage, a large-diameter cable must be provided to connect the power supply to the load so that a great amount of electric current is supplied to the load. If the diameter of the cable is not sufficiently large, a great voltage drop occurs in the cable and decreases the voltage supplied to the load. In this case, to ensure supply of necessary power to the load, a greater amount of electric current must be supplied to the load. For this purpose, the electric current supplied to the cable is decreased by maximally increasing the voltage supplied to the high-power load.

For example, in some automobiles, a high-power load such as an electric power steering system or an active stabilizer, which consumes greater power than an auxiliary device such as headlights or a wiper driver motor, is fed not directly by a battery, or a power supply, but through a booster circuit. Specifically, the booster circuit may raise the output voltage of the battery, which is 12 V, to 42 V, which is the value greater than three times the original output voltage of the battery, before the voltage is supplied to the high-power load.

As illustrated in Fig. 4, Japanese Laid-Open Patent Publication No. 2000-50668 discloses a motor speed controller having a rectifying circuit 42, a converter circuit 43, a smoothing capacitor 44, and an inverter circuit 45. The rectifying circuit 42 rectifies a voltage supplied by an alternate current power supply 41. The converter circuit 43 converts a direct current voltage provided by the rectifying circuit 42 to a predetermined level of voltage. The smoothing capacitor 44 smoothes the direct current voltage sent by the converter circuit 43. The inverter circuit 45 inverts the direct current voltage from the smoothing capacitor 44 to an alternate current voltage. The speed controller further includes a converter driver circuit 46, an inverter driver circuit 47, and a condition detecting circuit 49, a speed detecting circuit 50, and a control section 51. The converter driver circuit 46 drives the converter circuit 43 and the inverter driver circuit 47 drives the inverter circuit 45. The condition detecting circuit 49 detects an unstable operating state of a motor 48. The speed detecting circuit 50 detects the rotational speed of the motor 48. The control section 51 regulates the output of the converter circuit 43 and the output of the inverter circuit 45.

For example, an electric power steering system of a vehicle includes a battery, a steering assisting motor, and a motor driver circuit. The motor requires higher power when the amount of steering is great, but such requirement lasts only for a short period of time (which is, for example, a few seconds). The power consumed by the motor driver circuit when the vehicle travels at a high speed or the amount of steering is small is lower than the power consumed when the amount of steering is great. Even in a vehicle in which the motor driver circuit is powered by a typical vehicle battery that outputs a voltage of 12 V, the electric current fed to the motor driver circuit exceeds 100 A when the amount of steering is great. To ensure the amount of assistance needed for such great amount of steering, the diameter of the cable connecting the battery to the motor driver circuit must be sufficiently large so that the electric current of 100 A can smoothly flow in the cable, despite the fact that such flow lasts only for a short time. The large diameter of the cable complicates routing of the cable at predetermined positions and requires a great space for carrying out the routing. Also, the material cost of the cable increases.

If a booster circuit raises the output voltage of the battery before the voltage is supplied to the motor driver circuit, it is possible to lower a maximum electric current flowing in the cable to a value smaller than 100 A. However, even in this case, the diameter of the cable is determined in correspondence with the maximum value of the electric current flowing in the load when the amount of steering is great.

### SUMMARY OF THE INVENTION

Accordingly, it is an objective of the present invention to provide a power supply apparatus that decreases the diameter of at least a portion of a cable extending from an output portion of a power supply to a load to a value smaller than a diameter determined in correspondence with a maximum value of an electric current flowing in the load.

To achieve the foregoing objective and in accordance with a first aspect of the present invention,a power supply apparatus that supplies power of a battery to a load is provided. The power supply apparatus includes a booster circuit connected to the battery and a power storage section that temporarily stores power output by the booster circuit. The power storage section is connected in parallel with the load.

In accordance with a second aspect of the present invention, a power supply apparatus that supplies power of a battery to a load is provided. The power supply apparatus includes a booster circuit or a step-down circuit connected to the battery, and a power storage section that temporarily stores power output by the booster circuit or the step-down circuit. The power storage section is connected in parallel with the load. An upper limit of an output electric current of the booster circuit or the step-down circuit is set to a value greater than or equal to a time average of an electric current flowing in the load and smaller than a maximum value of the electric current flowing in the load.

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a block diagram illustrating a power supply apparatus and a load according to one embodiment of the present invention;
Fig. 2 is a graph representing change of an electric current supplied to a motor driver circuit as the time elapses;
Fig. 3 is a block diagram illustrating a power supply apparatus and a load according to a modification; and
Fig. 4 is a block diagram illustrating a conventional motor speed controller.

### DETAILED DESCRIPTION OF THE PREFERRED EMBODIMENTS

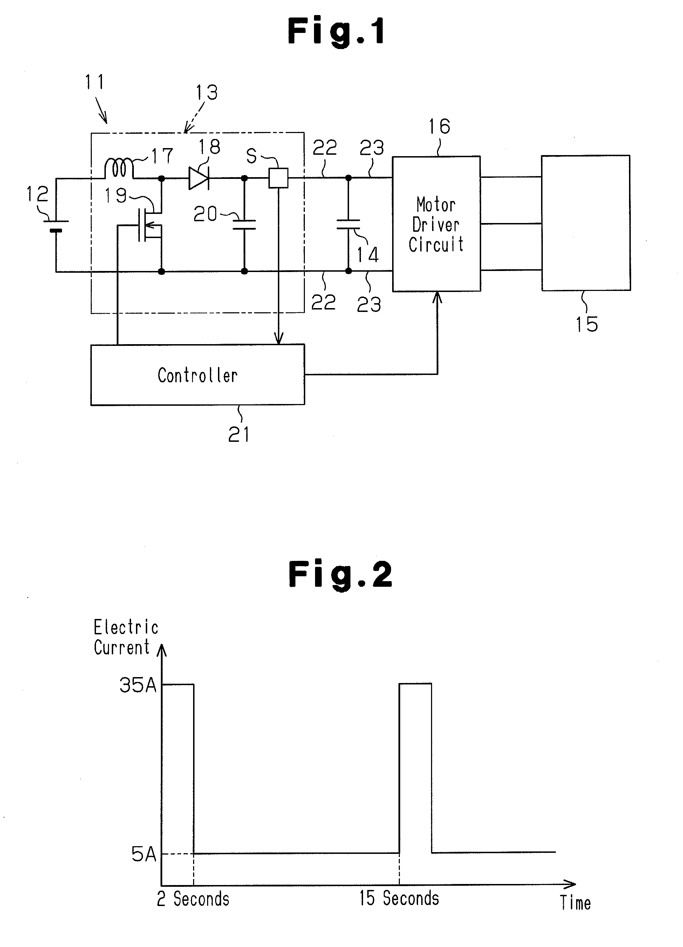

A power supply apparatus 11 according to one embodiment of the present invention will now be described with reference to Figs. 1 and 2. The power supply apparatus 11 supplies power to a motor of an electric power steering system (hereinafter, referred to as an "EPS") of a vehicle.

As illustrated in Fig. 1, the power supply apparatus 11 includes a battery 12, or a power supply for general auxiliary devices, a booster circuit 13, and a power storage section 14. The booster circuit 13 is connected to the battery 12. The power storage section 14 temporarily stores the energy output by the booster circuit 13. The battery 12 outputs a voltage of 12 V. The booster circuit 13 raises the output voltage of the battery 12 (the battery voltage) by more than three times. For example, the booster circuit 13 increases the output voltage of the battery 12, which is 12 V, to a voltage of 42 V. In the present embodiment, a capacitor is employed as the power storage section 14. A motor driver circuit 16, which drives a motor 15 of the EPS, is connected in parallel with the booster circuit 13 and the power storage section 14. In the present embodiment, a three-phase motor is used as the motor 15 and a three-phase inverter is employed as the motor driver circuit 16. The motor 15 and the motor driver circuit 16 configure a load. In other words, the load is connected in parallel with the power storage section 14. In this description, the load includes not only an electrical actuator, but also a drive circuit that supplies drive current to the actuator in some cases.

The booster circuit 13 includes a coil 17, a diode 18, a MOSFET 19 serving as a switching element, and a smoothing capacitor 20. The coil 17 is provided between the plus terminal of the battery 12 and the anode of the diode 18. The drain of the MOSFET 19 is connected to a node between the coil 17 and the diode 18. The source of the MOSFET 19 is connected to the minus terminal of the battery 12. The capacitor 20 is provided between the cathode of the diode 18 and the source of the MOSFET 19.

The MOSFET 19 is controlled by a controller 21. The controller 21 generates a drive signal in response to which the MOSFET 19 is driven to supply a predetermined level of voltage to the motor driver circuit 16. The controller 21 outputs the drive signal to the gate of the MOSFET 19. The controller 21 controls the MOSFET 19 in such a manner that the electric current output by the booster circuit 13 does not exceed a predetermined upper limit. The booster circuit 13 includes an electric current sensor S, which detects the electric current output by the booster circuit 13. The electric current sensor S outputs a detection signal to the controller 21. Based on the detection signal, the controller 21 controls the MOSFET 19 in such a manner that the electric current output by the booster circuit 13 does not exceed the predetermined upper limit.

The upper limit of the electric current output by the booster circuit 13 is set to a value greater than or equal to the time average of the electric current flowing in the motor driver circuit 16 and smaller than the maximum value of the electric current flowing in the motor driver circuit 16. Although the upper limit of the output electric current of the booster circuit 13 may theoretically be equal to the time average of the aforementioned electric current, the upper limit is actually set to a value higher than the time average of the electric current to ensure a certain margin. However, the upper limit of the output electric current of the booster circuit 13 cannot be set to a value greater than or equal to the electric current flowing in the motor driver circuit 16.

The diameter of a first cable 23, which connects the power storage section 14 to the motor driver circuit 16, is set to such a value that a maximum electric current can be supplied to the motor driver circuit 16. The diameter of the first cable 23 is thus greater than the diameter of a second cable 22 connecting the booster circuit 13 to the power storage section 14. Accordingly, it is preferable that the length of the first cable 23 be smaller than or equal to the length of the second cable 22. Further, to ensure a sufficient space for accommodating the power storage section 14, it is preferable that the power storage section 14 be arranged maximally close to the motor driver circuit 16 and the length of the first cable 23 be minimized.

Operation of the power supply apparatus 11 will hereafter be explained. In response to a command from a non-illustrated ECU (electronic control unit), the controller 21 controls the booster circuit 13 and the motor driver circuit 16 in such a manner that the motor 15 of the EPS is driven at a required torque. When the vehicle travels along a straight line, a small load acts on the motor 15 of the EPS and the required torque of the motor 15 is small. As a result, the motor 15 is driven only by an electric current output by the booster circuit 13. The power storage section 14 stores some of the energy output by the booster circuit 13.

When the amount of steering is great, a high power of 1 kW to 1.5 kW must be supplied to the motor 15 to drive the motor 15, but such supply lasts only for a short period of time, which is less than a few seconds. In this state, if the output voltage of the battery 12 is supplied to the motor driver circuit 16 without being raised, an electric current exceeding 100 A must be supplied to the first cable 23. It is thus necessary to increase the diameter of the first cable 23 in order to ensure a smooth flow of the electric current, which exceeds 100 A, through the first cable 23. However, in the present embodiment, the booster circuit 13 increases the battery voltage (12 V) to the voltage (42 V) that is higher than three times the battery voltage before the voltage is supplied to the motor driver circuit 16. The electric current flowing in the first cable 23 thus becomes as small as approximately one third of the case where the battery voltage is not raised by the booster circuit 13. Since the upper limit of the output electric current of the booster circuit 13 is limited, the electric current required by the motor driver circuit 16 cannot be fulfilled by the electric current output by the booster circuit 13. However, the power storage section 14 supplies the power to the motor driver circuit 16 to compensate for the shortage so that the motor driver circuit 16 receives the necessary electric current. That is, the electric current flowing in the first cable 23 reaches the level needed by the motor driver circuit 16, but the electric current flowing in the second cable 22 is smaller than the electric current flowing in the first cable 23. The diameter of the second cable 22 thus can be set to a value smaller than the value determined based on the maximum value of the electric current flowing in the motor driver circuit 16. Further, the output electric current of the booster circuit 13 is greater than or equal to the time average of the electric current required by the motor driver circuit 16. Accordingly, from the view point of the time average, the booster circuit 13 is capable of supplying the entire amount of the electric current required by the motor driver circuit 16 to the motor driver circuit 16. This prevents the power storage section 14 from losing the stored energy as the time elapses and becoming incapable of supplying the energy to the motor driver circuit 16. Also, since the upper limit of the electric current output by the booster circuit 13 is limited, elements with small ratings can be used as the electronic components of the booster circuit 13 so that the scale of the booster circuit 13 is reduced. A loss corresponding to the output electric current of the booster circuit 13 occurs in the MOSFET 19 or the diode 18. If the entire amount of the electric current required by the motor driver circuit 16 is supplied only by the booster circuit 13, a loss corresponding to the large electric current required by the motor driver circuit 16 occurs even for a short period of time. As a result, a cooling component (such as a heat sink) must be designed in such a manner as to prevent the MOSFET 19 or the diode 18 from being damaged by a temperature rise caused by such loss. Nonetheless, if the upper limit of the output electric current of the booster circuit 13 is limited, as in the present embodiment, the loss is decreased and the cooling component is reduced in size.

Next, operation of the power supply apparatus 11 when the booster circuit 13 and the power storage section 14 both supply an electric current to the motor driver circuit 16 will be explained quantitatively. The maximum output of the motor 15 is 1.5 kW. With reference to Fig. 2, if an electric current of 5 A flows in the motor driver circuit 16 in a stationary state and a maximum electric current of 35 A flows in the motor driver circuit 16 continuously for two seconds at cycles of 15 seconds, the time average of the electric current supplied to the motor driver circuit 16 is 9 A. The upper limit of the output electric current of the booster circuit 13 is thus limited to 9 A. In this manner, the power storage section 14 is held in a charging state during the stationary state and switched to a discharging state when the maximum electric current of 35 A is supplied to the motor driver circuit 16. In other words, when the maximum electric current of 35 A is fed to the motor driver circuit 16, the motor driver circuit 16 receives electric currents from the booster circuit 13 and the power storage section 14. This averages the output electric current of the booster circuit 13. If the booster circuit 13 is designed based on the maximum value of the electric current flowing in the motor driver circuit 16, the booster circuit 13 is capable of outputting an electric current of 35 A as a maximum output electric current. However, in the present embodiment, the power storage section 14 is connected in parallel with the motor driver circuit 16 and the motor driver circuit 16 receives electric currents both from the booster circuit 13 and the power storage section 14. In this case, the booster circuit 13 is capable of outputting an electric current of 9 A as the maximum output electric current. This decreases the rated electric current of the MOSFET 19 or the diode 18, and thus the size of the booster circuit 13 is reduced.

The period in which the maximum electric current of 35 A flows in the motor driver circuit 16 lasts for two seconds and is sufficiently longer than the reaction time (the control time) of the booster circuit 13. As a result, even with the power storage section 14 connected in parallel with the motor driver circuit 16, the maximum electric current of 35 A is supplied from the booster circuit 13 to the motor driver circuit 16. This causes the maximum electric current of 35 A to flow in the second cable 22. To prevent this flow, the upper limit of the electric current output by the booster circuit 13 must be limited. In the present embodiment, the upper limit of the output electric current of the booster circuit 13 is limited to 9 A. Accordingly, if the electric current required by the motor driver circuit 16 exceeds 9 A, the power storage section 14 supplies an electric current that compensates for the shortage of the required electric current to the motor driver circuit 16. This allows limitation of the electric current flowing in the second cable 22 to 9 A.

Although the maximum electric current of 35 A flows in the first cable 23 for a short period of time, the length of the first cable 23 is minimized by arranging the power storage section 14 in the immediate proximity of the motor driver circuit 16. Further, since an electric current not greater than 9 A flows in the second cable 22, the diameter of the second cable 22 is reduced to the value determined in correspondence with 9 A. The maximum electric current flowable in a cable changes in proportion to the cross-sectional area of the cable. Since the maximum value of the electric current flowing in the second cable 22 is approximately one fourth of the maximum value of the electric current flowing in the first cable 23, the diameter of the second cable 22 is approximately the half of the diameter of the first cable 23.

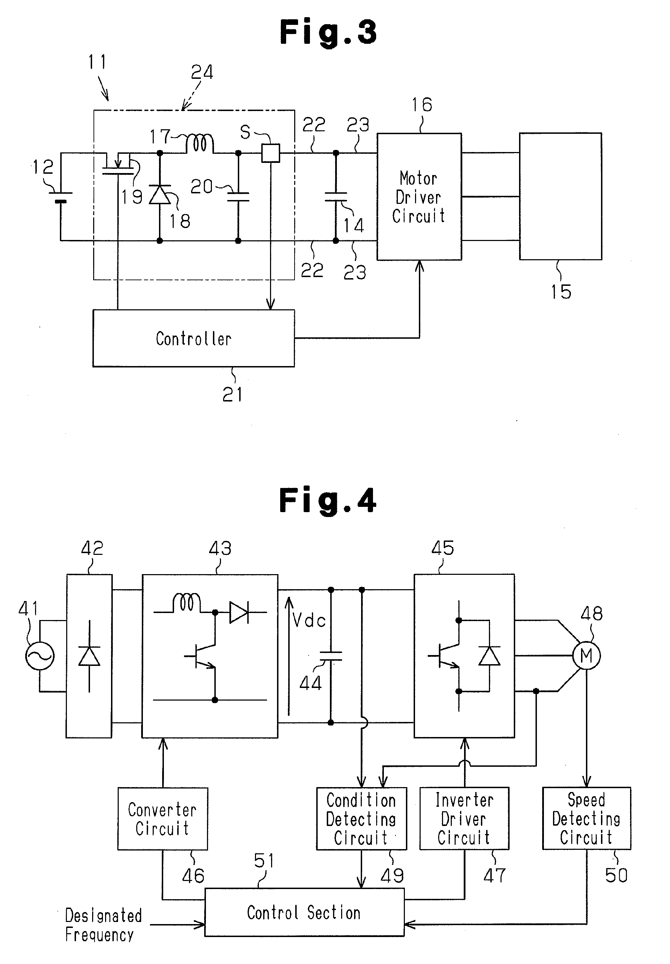

With reference to Fig. 4, as disclosed in Japanese Laid-Open Patent Publication No. 2000-50668, the smoothing capacitor 44 is provided between the output terminal of the converter circuit 43 and the input terminal of the inverter circuit 45. However, as described in this document, the capacitor 44 operates to smooth the electric current with the direct current voltage that has been converted by the converter circuit 43 to a desired level. That is, unlike the present invention, the capacitor 44 neither temporarily stores energy nor supplies an electric current to the inverter 45 (which corresponds to the motor driver circuit 16 of the present embodiment) when the inverter 45 requires a great amount of electric current. Also, the aforementioned document does not describe functions of the smoothing capacitor 44 other than smoothing the electric current.

The present embodiment has the following advantages.
(1) The power supply apparatus 11 includes the booster circuit 13 connected to the battery 12 and the power storage section 14, which temporarily stores the power output by the booster circuit 13. The motor driver circuit 16, which is a load, is connected in parallel with the power storage section 14. Accordingly, in supply of the power to the load in which the power consumption rises temporarily for a short time (in the order of seconds), the electric current sent from the power storage section 14 to the load becomes equal to the level required by the motor driver circuit 16 but the electric current flowing in the second cable 22 connecting the booster circuit 13 to the power storage section 14 becomes smaller than the level required by the motor driver circuit 16. The diameter of the second cable 22, which connects the booster circuit 13 to the power storage section 14, is thus set to a value smaller than the diameter of the first cable 23. This reduces the diameter of at least a portion of the cable that connects the booster circuit 13 to the motor driver circuit 16, compared to a case without the power storage section 14.
(2) The upper limit of the output electric current of the booster circuit 13 is set to a value greater than or equal to the time average of the electric current flowing in the motor driver circuit 16, which is a load, and smaller than the maximum value of the electric current flowing in the motor driver circuit 16. If the supply time of the nonstationary electric current required by the motor driver circuit 16 is shorter than the reaction time (the control time) of the output of the booster circuit 13, the nonstationary current can be supplied to the motor driver circuit 16 by adding the electric current supplied by the power storage section 14, without increasing the output electric current of the booster circuit 13. However, if the aforementioned supply time of the nonstationary current exceeds the reaction time (the control time), most of the electric current required by the motor driver circuit 16 is supplied by the booster circuit 13. This makes it necessary to increase the diameter of the second cable 22. However, in the present embodiment, the upper limit of the output electric current of the booster circuit 13 is less than the maximum value of the electric current flowing in the motor driver circuit 16. As a result, the diameter of the second cable 22 is set to a value smaller than the value determined in correspondence with the maximum electric current flowing in the motor driver circuit 16.
(3) The length of the first cable 23, which connects the power storage section 14 to the motor driver circuit 16, is set to a value smaller than the length of the second cable 22, which connects the booster circuit 13 to the power storage section 14. Since a greater amount of electric current flows in the first cable 23 than in the second cable 22, the diameter of the first cable 23 must be greater than the diameter of the second cable 22. However, in the present embodiment, since the cable first 23 is shorter than the second cable 22, the proportion of the cable portions with smaller diameters in the cable connecting the booster circuit 13 to the load is increased.
(4) The capacitor is employed as the power storage section 14. This decreases the cost and the weight of the power storage section 14 and prolongs the life of the power storage section 14, compared to a case in which a secondary battery is used as the power storage section 14. Further, the internal resistance of the capacitor is smaller than the internal resistance of the secondary battery. This enables the capacitor to charge and discharge a greater amount of electric current, reducing the amount of the heat caused by such electric current, compared to the secondary battery.
(5) The booster circuit 13 does not have a transformer. The booster circuit 13 thus becomes smaller-sized than a booster circuit including a transformer.
(6) When used, the power supply apparatus 11 is mounted in a vehicle. Since many devices are installed in the vehicle, it is desired that the space in which the devices and cables (harnesses) connecting the devices to the power supply be reduced so as to facilitate the installation of the devices and the cables. The power supply apparatus 11 satisfies such need.

The present embodiment is not restricted to the above-described form but may be embodied in the following forms.

The power storage section 14 is not restricted to the capacitor. The power storage section 14 may be a secondary battery such as a lead battery, a lithium-ion secondary battery, or a nickel-hydrogen battery as long as the power storage section 14 temporarily stores the energy output by the booster circuit 13 and, if the electric current supplied to the load cannot be fulfilled by the booster circuit 13 alone, the electric current supplied by the booster circuit 13 and the electric current supplied by the power storage section 14 in combination are supplied to the load.

A secondary battery may be employed as the power storage section 14. In this case, a drop of the output voltage caused by supply of an electric current to the load becomes small, compared to the case in which the capacitor is used as the power storage section 14.

The upper limit of the output electric current of the booster circuit 13 may be set to a value greater than the time average of the electric current flowing in the load by 10% to 20%.

The output voltage of the booster circuit 13 is not restricted to 42 V but may be either greater or smaller than 42 V in accordance with the rated voltage of a motor that configures a load.

Other than the EPS, a device that consumes high power in a short period of time such as an active stabilizer, an electric brake, or an engine starter is suitable as the load.

The motor 15 is not restricted to the three-phase motor, but may be a single-phase motor. In this case, a single-phase inverter is employed as the motor driver circuit 16.

The booster circuit 13 may include a transformer.

The switching element is not restricted to the MOSFET 19, but may be an IGBT (insulated gate bipolar transistor) or other switching elements.

The load does not necessarily receive the output current of the booster circuit 13 through a driver circuit, which is the motor driver circuit 16, but may receive the output current directly from the booster circuit 13.

The power supply apparatus 11 is not restricted to use in a vehicle, but may be used as a power supply of other actuators.

The output voltage of the battery 12, to which the booster circuit 13 is connected, is not restricted to 12 V. In other words, depending on the purpose, the battery 12 may output a voltage higher than 12 V. If the power supply apparatus 11 is used in, for example, a hybrid vehicle, the booster circuit 13 may be replaced by a circuit that steps down a voltage of a high-voltage battery and supplies an electric current with the reduced voltage to a load. In this case, with reference to Fig. 3, a step-down circuit 24 and the power storage section 14 are employed in combination. The step-down circuit 24 steps down a voltage output by a high-voltage battery, which outputs approximately 300 V, to a voltage of 42 V. Also in this case, the diameter of at least the second cable 22 connecting the step-down circuit 24 to the power storage section 14 is set to a value smaller than the diameter determined in correspondence with the maximum value of the electric current flowing in the load.

A power supply apparatus that supplies voltage of a battery to a load is disclosed. The power supply apparatus includes a booster circuit connected to the battery and a power storage section, which temporarily stores the power output by the booster circuit. The power storage section is connected in parallel with the load.

## Claims

1. A power supply apparatus (11) that supplies power of a battery (12) to a load (15, 16), the power supply apparatus **being characterized by:**
a booster circuit (13) connected to the battery (12); and
a power storage section (14) that temporarily stores power output by the booster circuit (13), the power storage section (14) being connected in parallel with the load (15, 16).

2. The power supply apparatus according to claim 1, **characterized in that** an upper limit of an output electric current of the booster circuit (13) is set to a value greater than or equal to a time average of an electric current flowing in the load (15, 16) and smaller than a maximum value of the electric current flowing in the load (15, 16).

3. The power supply apparatus according to claim 1 or 2, **characterized by:**
a first cable (23) connecting the power storage section (14) to the load (15, 16); and
a second cable (22) connecting the booster circuit (13) to the power storage section (14), the length of the first cable (23) being smaller than the length of the second cable (22).

4. The power supply apparatus according to any one of claims 1 to 3, **characterized in that** the diameter of a second cable (22) connecting the booster circuit (13) to the power storage section (14) is set to a value smaller than or equal to a value that is 20% greater than a lower limit of the diameter that ensures a smooth flow of an electric current corresponding to the time average of the electric current flowing in the load (15, 16), and
wherein the diameter of a first cable (23) connecting the power storage section (14) to the load (15, 16) is set to a value that ensures a flow of an electric current smaller than a maximum value of the electric current flowing in the load (15, 16).

5. The power supply apparatus according to any one of claims 1 to 4, **characterized in that,** when in a stationary state, the load (15, 16) consumes a certain amount of power, and wherein, when held in a high load state, the load (15, 16) consumes a power multiple times greater than the power in the stationary state in a short period of time in the order of seconds.

6. The power supply apparatus according to any one of claims 1 to 5, **characterized in that** the power supply apparatus (11) is used in a vehicle.

7. A power supply apparatus (11) that supplies power of a battery (12) to a load (15, 16), the power supply apparatus **being characterized by:**
a step-down circuit (24) connected to the battery (12); and
a power storage section (14) that temporarily stores power output by the step-down circuit (24), the power storage section (14) being connected in parallel with the load (15, 16),
wherein an upper limit of an output electric current of the booster circuit (13) or the step-down circuit (24) is set to a value greater than or equal to a time average of an electric current flowing in the load (15, 16) and smaller than a maximum value of the electric current flowing in the load (15, 16).

8. The power supply apparatus according to claim 7, **characterized by:**
a first cable (23) connecting the power storage section (14) to the load (15, 16); and
a second cable (22) connecting the step-down circuit (24) to the power storage section (14), the length of the first cable (23) being smaller than the length of the second cable (22).
